# EUROPÄISCHE PATENTSCHRIFT

(11) **EP 2 734 362 B1**
(45) Veröffentlichungstag und Bekanntmachung des Hinweises auf die Patenterteilung: **16.09.2015**
(21) Anmeldenummer: 12745771.1
(22) Anmeldetag: 11.07.2012
(51) Int. Cl.: B32B 7/12

(54) **BESCHICHTETES PAPIER ODER KARTON**
COATED PAPER OR CARDBOARD
PAPIER OU CARTON REVÊTU

(30) Priorität: 20.07.2011 DE 102011107965; 27.12.2011 DE 102011122211
(43) Veröffentlichungstag der Anmeldung: 28.05.2014
(73) Patentinhaber: Walki Group Oy, 02170 Espoo (FI)
(72) Erfinder: SKATAR, Rune, 66980 Monå (FI); HOLTI, Mats, 68660 Jakobstad (FI)
(74) Vertreter: Hauck Patentanwaltspartnerschaft mbB
(86) Internationale Anmeldenummer: PCT/EP2012/002917
(87) Internationale Veröffentlichungsnummer: WO 2013/010649

(56) Entgegenhaltungen:
- EP-A1- 2 123 450
- WO-A1-00/01530
- WO-A1-96/31303
- WO-A1-96/33923
- WO-A1-98/53141
- WO-A2-2009/032748
- WO-A2-2009/120311
- US-A- 4 777 088
- US-A- 5 153 061
- US-A1- 2003 199 218
- US-B1- 6 358 576

## Beschreibung

Die Erfindung bezieht sich auf ein beschichtetes Papier oder einen beschichteten Karton.

Seit langem ist bekannt, dass bei Lebensmitteln, die Kontakt mit Recyclingkartons haben, die Gefahr einer Kontamination durch den Übergang von Verpackungsbestandteilen auf die Lebensmittel besteht. Demzufolge wird der Einsatz von Recyclingkartons für Lebensmittelverpackungen in der Regel auf trockene und nicht fetthaltige Lebensmittel beschränkt.

Dies galt als ausreichend, bis aktuelle Forschungsergebnisse des Kantonalen Labors Zürich gezeigt haben, dass Mineralöle aus bestimmten Druckfarben, die durch den Recyclingprozess nicht vollständig entfernt wurden, durch "Ausgasen" in bestimmte Lebensmittel übergehen und diese kontaminieren können. Reis, Nudeln, Brot, Cornflakes und andere Getreideprodukte mit großen Oberflächen sind besonders gefährdet, da sie die winzigen Kohlenwasserstoffe leicht aufnehmen können. Auch wenn Lebensmittel, zum Beispiel Cornflakes oder andere Cerealien, in einem Beutel in Recyclingkarton eingepackt sind, ist eine Migration von Mineralölen über die Gasphase in die Lebensmittel hinein möglich. Ferner ist bekannt, dass bei einer Anreicherung derartiger Chemikalien über bestimmte Werte hinaus Gesundheitsrisiken für Tiere und damit auch für Menschen bestehen.

Es besteht jedoch ein grundlegender Mangel an Daten zu diesem Thema. Dem deutschen Bundesinstitut für Risikobewertung (BfR) zufolge sollte der Übergang von Mineralölen in Lebensmitteln daher minimiert werden. Zurzeit laufen Untersuchungen zur Bestimmung sicherer Grenzwerte für diese Stoffe.

Recyclingkartons enthalten typischerweise einen Mineralölanteil von 300 bis 1000 mg/kg. Es ist jedoch nicht bekannt, in welchem Maße Lebensmittel durch den Übergang von Mineralöl aus Kartonverpackungen kontaminiert werden und welche in Mineralöl vorkommenden chemischen Bestandteile daran beteiligt sind.

Die in Karton nachgewiesenen Mineralölbestandteile bestehen aus gesättigten sowie aromatischen Kohlenwasserstoffen. Chemisch betrachtet handelt es sich bei den gesättigten Kohlenwasserstoffen um ketten- und ringförmige Kohlenwasserstoffe (MOSH). Aromatische Kohlenwasserstoffe (MOAH) bestehen aus einer komplexen Mischung, überwiegend aus alkylierten polyzyklischen aromatischen Kohlenwasserstoffen.

Dass BfR hat empfohlen, Maßnahmen zu ergreifen, um die potentielle Gesundheitsgefährdung der Verbraucher zu minimieren. Es hat den Kartonherstellern vorgeschlagen, migratiosarme Druckfarben oder Verpackungsmaterialien mit geeigneten Barriereschichten oder Innenbeschichtungen zu verwenden, um eine Migration aus potentiell kontaminiertem Karton zu verhindern. (Walki News Release. 25. Januar 2011).

Das deutsche Bundesministerium für Ernährung, Landwirtschaft und Verbraucherschutz (BMELV) plant derzeit eine nationale Mineralölverordnung. Darin sollen Höchstmerigen für den Übergang gesättigter und aromatischer Kohlenwasserstoffe aus Lebensmittelbedarfsgegenständen, die unter Verwendung von recycliertem Altpapier hergestellt wurden, auf die Lebensmittel festgelegt werden. Die derzeitige Entwurfsfassung der Verordnung sieht folgende Grenzwerte vor:
- MOAH: nicht nachweisbar im Lebensmittel; als nicht nachweisbar gilt ein maximaler Übergang von 0,15 mg/kg Lebensmittel (MOAH mit einer Kettenlänge von C10 bis C25). Dieser Grenzwert stellt die derzeitige analytische Nachweisgrenze dar;
- MOSH: 0,6 mg / pro kg Lebensmittel (Summe der MOSH mit einer Kettenlänge von C10 bis C 15).

Auch aus Frischfaserkartons können, bedingt durch den Herstellungsprozess, Mineralöle austreten. Diese stammen aus Fetten, Schmiermitteln etc., die aus der Mechanik der Produktionsmaschinen in die Frischfaserkartons gelangen. Bei der Überprüfung der Migration von Mineralöl aus Frischfaserkartons und ihr Ausmaß sind auch dort migrierenden Mineralöle festgestellt wurden. Das Ausmaß ist zwar wesentlich geringer als bei Recyclingmaterialien. Dennoch ist es auch bei Frischfaserkartons möglich, dass aufgrund der Migration von Mineralöl der Grenzwert von 0,6 mg/kg Lebensmittel überschritten wird.

Die WO 2009/032748 A2, WO 00/01530 A1, WO 96/33923 A1, WO 96/31303 A1, US 2003/199218 A1, EP 2 123 450 A1, WO 2009/120311 A2 und WO 98/53141 A1 beschreiben ein beschichtetes Papier oder Karton umfassend mindestens eine Schicht aus Papier oder Karton, eine darauf angeordnete Schicht aus einem Haftvermittler und eine darauf angeordnete Schicht aus einem Biokunststoff.

Davon ausgehend liegt der Erfindung die Aufgabe zugrunde, ein beschichtetes Papier oder Karton mit einer Barriere zu schaffen, welche die Migration von Mineralöl stark herabsetzt.

Die Aufgabe wird durch ein beschichtetes Papier oder Karton mit den Merkmalen von Anspruch 1 gelöst. Vorteilhafte Ausgestaltungen des beschichteten Papiers oder Kartons sind in Unteransprüchen angegeben.

Das beschichtete Papier oder Karton umfasst
- mindestens eine Schicht aus Papier oder Karton,
- eine auf der Schicht aus Papier oder Karton angeordnete Schicht aus einem Haftvermittler und
- eine auf der Schicht aus einem Haftvermittler angeordnete Schicht aus einem Biokunststoff, wobei der Biokunststoff ein polar Typbiokunststoff ist und wobei
- zwischen der Schicht aus Papier oder Karton und der Schicht aus einem Haftvermittler eine Schicht aus einem Polyolefin oder einem modifizierten Polyolefin, wie LDPE und/oder HDPE oder eine Schicht aus PP oder PE oder aus EBA, EMA, EAA oder EAH angeordnet ist.

Untersuchungen der Anmelderin haben gezeigt, dass Standardbeschichtungen aus Polyethylen niedriger Dichte (LDPE, PE-LD, Abkürzung für low density polyethylen) und Polyethylen hoher Dichte (HDPE, PE-HD, Abkürzung für high density polyethylen), die normalerweise als effektive funktionale Barrieren für die Fett- und Wasserbeständigkeit von Karton sorgen, keine adäquate Barriere für das "Ausgasen" von Mineralöl bilden, da dieses durch Standard-LDPE und -HDPE hindurch migriert. Überraschenderweise hat sich nun gezeigt, dass eine Schicht aus Biokunststoff auf einer Schicht auf Papier oder Karton eine besonders wirksame Barriere gegen die Migration von Mineralöl aus Papier oder Karton ist. Als Biokunststoff werden Kunststoffe bezeichnet, die auf Basis von nachwachsenden Rohstoffen erzeugt werden. Diese Biokunststoffe werden vollständig oder zu überwiegenden Anteilen aus Biopolymeren hergestellt. Biokunststoffe haben somit eine andere Rohstoffbasis als erdölbasierende Druckfarben, Fette- oder Schmiermittel, die im Papier oder Karton enthalten sind. Anscheinend beruht die Sperrwirkung der Schicht aus Biokunststoff darauf, dass die im Papier oder Karton enthaltenen Mineralöle aufgrund ihrer abweichenden Rohstoffbasis die Schicht aus Biokunststoff nicht durchdringen können. Obendrein hat sich gezeigt, dass die Mineralöle aus dem Papier oder Karton sich mit dem Biokunststoff auch nicht verbinden oder in diesen eindringen. Andernfalls könnte dies dazu führen, dass sich beim Aufrollen eines beschichteten Papiers oder Kartons Mineralöle von der Außenseite des Papiers oder Kartons aus an der Innenseite des Biokunststoffes anlagern, die bei Verwendung des beschichteten Papiers oder Kartons als Verpackungsmaterial in Kontakt mit dem Produkt kommt. Die Barriere wäre dann durch das Aufrollen des beschichteten Papiers oder Kartons, das regelmäßig zu Lagerungs- und Transportzwecken erfolgt, überwunden. Ferner hat sich gezeigt, dass Biokunststoffe grundsätzlich nicht direkt mit Papier oder Karton verbindbar sind. Deshalb ist erfindungsgemäß eine Schicht aus einem Haftvermittler zwischen der Schicht aus Papier oder Karton und der Schicht aus einem Biokunststoff angeordnet. Der Haftvermittler stellt die Anhaftung des Biokunststoffes an dem Papier oder Karton sicher. Biokunststoff als Barriereschicht hat den weiteren Vorteil der biologischen Abbaubarkeit. Vorzugsweise ist das gesamte beschichtete Papier oder Karton biologisch abbaubar.

Die Schicht aus Papier oder Karton, auf die der Haftvermittler und der Biokunststoff aufgebracht sind, ist gemäß einer bevorzugten Ausgestaltung ein Recyclingpapier oder ein Recyclingkarton. Gemäß einer anderen Ausgestaltung ist die Schicht aus Papier oder Karton ein Frischfaserpapier oder Frischfaserkarton.

Der Biokunststoff ist vom polaren Typ.

Gemäß einer vorteilhaften Ausgestaltung ist der Biokunststoff Polymilchsäure oder ein auf Stärke oder Cellulose basierendes Polymer oder ein sonstiges Biopolymer. Es hat sich gezeigt, dass mit diesem Biokunststoff eine besonders wirksame Barriere für Mineralöle aus Papier oder Karton herstellbar ist. Polymilchsäure wird vorzugsweise aus dem nachwachsenden Rohstoff Mais hergestellt. Ein geeigneter Biokunststoff aus Polymilchsäure wird unter der Handelsbezeichnung Ecovio® (zum Beispiel Ecovio® FS Paper) von der BASF AG, Deutschland, vermarktet.

Der Haftvermittler und der Biokunststoff können durch Extrudieren auf die Schicht aus Papier oder Karton aufgebracht werden. Gemäß einer Ausgestaltung werden der Haftvermittler und der Biokunststoff und gegebenenfalls weitere Schichten (zum Beispiel aus LDPE oder HDPE) durch Koextrusion auf die Schicht aus Papier oder Karton aufgebracht. Hierfür kann beispielsweise ein Tripleextruder mit Feedblock (Sammelstück und Verteiler) zum Einsatz kommen. Gemäß einer alternativen Lösung der Aufgabe ist zwischen der Schicht aus Papier oder Karton und der Schicht aus einem Haftvermittler eine Schicht aus Polyethylen niedriger Dichte (LDPE) und/oder eine Schicht aus Polyethylen hoher Dichte (HDPE) angeordnet. Eine Schicht aus LDPE bildet eine Wasserdampfsperre, die bei der Verwendung des beschichteten Papiers oder Kartons als Verpackungsmaterial häufig benötigt wird. Durch die Wasserdampfsperre bleiben Lebensmittel und andere Füllgüter länger frisch, kross etc. und haben eine verlängerte Haltbarkeit. Eine Schicht aus HDPE bildet eine Fettsperre, die für die Verpackung vieler Produkte benötigt wird. Beispielsweise ist bei der Verpackung von Cornflakes eine Fettdichtigkeit des Verpackungsmaterials erforderlich. Zugleich bildet auch HDPE eine Wasserdampfsperre. Vorzugsweise weist das beschichtete Papier oder Karton nur eine einzige Schicht aus LDPE oder aus HDPE zwischen der Schicht aus Papier oder Karton und der Schicht aus einem Haftvermittler auf. Das beschichtete Papier oder Karton kann auch zwischen der Schicht aus Papier oder Karton und der Schicht aus einem Haftvermittler mit einer Schicht aus LDPE und zusätzlich mit einer Schicht aus HDPE versehen sein, wobei die Reihenfolge grundsätzlich beliebig ist.

Alternativ kann eine Schicht aus PE oder PP vorgesehen werden oder aus EBA, EHA, EAA oder EAH.

Geeignete Haftvermittler zur Verbindung der Schicht aus Biokunststoff mit der Schicht aus Papier oder Karton werden unter den Produktbezeichnungen Lotader 3210 und 3410 von der Firma Arcema Inc., Philadelphia, USA angeboten. Lotader® 3210 und Lotader® 3410 sind Zufalls-Terpolymere aus Ethylen, Acrylester und Maleinsäureanhydrid, polymerisiert in einem Hochdruck-Autoklavenverfahren.

Ein weiterer geeigneter Haftvermittler wird und der Handelsbezeichnung Plexar® PX 5125 (extrudable tielayer raisin anhydride modified LLDPE) von der Firma Lyondell Chemical Company, Houston, Texas, USA angeboten. Plexar® PX 5125 ist ein chemisch modifiziertes Harz.

Weiterer geeignete Haftvermittler = Harze werden unter der Produktbezeichnung Bynel® von der Firma DuPont Company, Wilmington, DE 19805, USA, angeboten.

Weitere geeignete Haftvermittler stehen dem Fachmann zur Verfügung.

Gemäß einer weiteren Ausgestaltung wird der Biokunststoff mit einem Flächengewicht von mindestens 3 g/m² und/oder von höchstens 10 g/m² auf die Schicht aus einem Haftvermittler aufgebracht. Eine Schicht aus Ecovio® mit einem Flächengewicht von 3 g/m² wird von Mineralölen allenfalls an der Nachweisgrenze durchwandert. Mit höheren Flächengewichten wird eine Durchwanderung deutlich unterhalb der Nachweisgrenze erreicht. Vorzugsweise wird der Biokunststoff mit einem Flächengewicht von 5 g/m² aufgebracht.

Gemäß einer Ausgestaltung beträgt das Flächengewicht der Schicht aus einem Haftvermittler 2 bis 15 g/m² bzw. bis 20 g/m². Vorzugsweise beträgt das Flächengewicht der Schicht aus einem Haftvermittler 10 g/m².

Gemäß einer Ausgestaltung des beschichteten Papiers oder Kartons von Anspruch 1 weist das beschichtete Papier oder Karton mehrere Schichten aus Papier oder Karton auf. Gemäß einer weiteren Ausgestaltung besteht mindestens eine Schicht aus Recyclingpapier oder Recyclingkarton. Bevorzugt weist dieses beschichtete Papier oder Karton zwei Schichten aus Papier oder Karton auf. Beide Schichten aus Papier oder Karton können aus Recyclingpapier oder Recyclingkarton bestehen. Es ist aber auch möglich, das eine der beiden Schichten aus Frischfaserpapier oder Frischfaserkarton besteht und nur eine Schicht aus Recyclingpapier oder Recyclingkarton bzw. aus Sekundärfaserpapier oder Sekundärfaserkarton.

Dieses beschichtete Papier kann für die Herstellung von Linern verwendet werden.

Ferner betrifft die Erfindung eine Verpackung, die ganz oder teilweise aus einem beschichteten Papier oder Karton gemäß einem der Ansprüche 1 bis 11 hergestellt ist. Gemäß einer Ausgestaltung umfasst die Verpackung eine Primärverpackung, d. h. eine Verpackung, die in direkten Kontakt mit der Ware kommt. Gemäß einer weiteren Ausgestaltung umfasst die Verpackung eine Sekundärverpackung (auch "Umverpackung" genannt), d. h. eine Verpackung, die nicht in Kontakt mit der Ware kommt. Die Ware ist in einer Primärverpackung in der Sekundärverpackung angeordnet. Die Sekundärverpackung ist gemäß einer Ausgestlatung aus einem Papier oder Karton hergestellt, das oder der nicht erfindungsgemäß beschichtet ist. Gemäß einer anderen Ausgestaltung ist die Sekundärverpackung aus einem erfindungsgemäß beschichtetem Papier oder Karton hergestellt. Wenn die Primärverpackung geöffnet ist, ist die Ware durch eine beschichtete Sekundärverpackung vor migrierendem Mineralöl aus der Sekundärverpackung geschützt.

Gemäß einer Ausgestaltung ist die Verpackung eine Faltschachtel, Einschlagpapier, Tüte, Beutel oder eine andere flexible Verpackung.

Die Faltschachtel ist beispielsweise eine innenseitig beschichtete Faltschachtel aus Karton für Lebensmittel, welche diese unmittelbar umschließt und direkten Kontakt mit den Lebensmitteln hat. Dies ist beispielsweise bei einer Faltschachtel für Tiefkühlprodukte (z.B. Fischstäbchen, Gemüse, Kräuter) oder bei einer Faltschachtel für Reis, Brot oder Getreideprodukte der Fall.

Das Einschlagpapier ist beispielsweise ein Einschlagpapier für Aufschnitt (Käse, Wurst etc.).

Gemäß einer Ausgestaltung ist der Beutel aus einem beschichteten Papier hergestellt. Der Beutel kann die einzige Verpackung sein, in die ein Lebensmittel eingepackt ist. Er kann insbesondere eine innenseitig beschichtete Tüte aus Papier für Suppen, Puddingpulver, Zucker, Salz etc. sein. Gemäß einer Ausgestaltung ist der Beutel in einer Umverpackung aufgenommen, beispielsweise in einem Umkarton, insbesondere in einer Faltschachtel aus Karton. Der Beutel ist beispielsweise ein Innenbeutel in einer Faltschachtel aus Karton, der Cerealien (Cornflakes, Müsli etc.) enthält und der den bislang zum Einsatz kommenden Innenbeutel aus Kunststoff ersetzt. Der Beutel ist z.B. aus gebleichtem (weißem) oder ungebleichtem (braunen) Kraftpapier mit einer Grammatur von 20 bis 90 g/m2 hergestellt, der erfindungsgemäß mit einer Beschichtung versehen ist, die eine Mineralölbarriere bildet. Die Beschichtung des Beutels kann dazu dienen, Mineralöle aus dem Beutel und/oder aus der Umverpackung von einer Füllung des Beutels abzuhalten.

Das beschichtete Papier oder Karton der Umverpackung ist wahlweise ein- oder beidseitig gemäß der Erfindungsvariante von Anspruch 1 beschichtet.

Gemäß einer weiteren Ausgestaltung enthält die Verpackung Lebensmittel oder Arzneimittel. Gemäß einer weiteren Ausgestaltung sind die Lebensmittel Reis, Brot, Nudeln, Cerealien oder andere Getreideprodukte

Ferner betrifft die Erfindung einen Liner, der aus einem beschichteten Papier oder Karton gemäß Ansprüchen 9 bis 11 hergestellt ist. Ein Liner ist ein Papier oder Karton, der aus mehreren Schichten Papier oder Karton besteht und eine erhöhte Festigkeit aufweist. Ein Liner wird beispielsweise auf Wellpappe geklebt, um Kisten für Lebensmittel (zum Beispiel Obst, Gemüse, Fisch, Fleisch) herzustellen. Eine Lage Papier kann außen gestrichen sein, um eine gute Grundlage für einen Farbaufdruck zu bilden.

Die erfindungsgemäße Beschichtung von Papier oder Karton kann anstatt auf eine Schicht aus Papier oder Karton auf eine PET-Folie vorzugsweise mit der Dicke von 8 bis 15 µm angewendet werden, um die angestrebte Eigenschaft einer Mineralölbarriere an einer PET-Folie zu erzielen. Dies ist insbesondere bei einer bedruckten oder mit einem bedruckten Etikett versehenen PET-Folie oder bei Anordnung einer Primärverpackung aus einer PET-Folie in einer bedruckten Umverpackung oder aus Karton oder in einer Umverpackung aus Recycling-Karton von Vorteil. Die Beschichtung der PET-Folie weist vorzugsweise dieselben Haftvermittler und/oder dieselben Biokunststoffe wie das beschichtete Papier oder der beschichtete Karton auf. Die Erfindung bezieht sich somit auf beschichtete PET-Folien mit den Merkmalen eines der Ansprüche 1 bis 16 und auf Verpackungen mit den Merkmalen eines der Ansprüche 17 bis 22, bei denen die Schicht aus Papier oder Karton ersetzt ist durch eine PET-Folie.

### Es folgen drei Ausführungsbeispiele:

Recyclingkarton der Qualität GD2 260 g/m² wurde mit einer Schicht aus einem Haftvermittler vom Typ Lotader 3210 mit einem Flächengewicht von 10 g/m² beschichtet. Darauf wurde eine Schicht des Biokunststoffes Ecovio® FS Paper aufgebracht. Sämtliche Schichten wurden im Koextrusionsverfahren mittels eines Triple-Extruders mit Feedblock aufextruiert. Beim ersten Ausführungsbeispiel betrug das Flächengewicht des Biokunststoffes 3 g/m², beim zweiten Ausführungsbeispiel betrug sie 5 g/m² und beim dritten Ausführungsbeispiel 10 g/m².

Die drei Ausführungsbeispiele wurden auf Migration von Mineralölen überprüft. Hierzu wurde auf der beschichteten Seite auf einer Prüffläche von 1 dm² 4,0 g Tenax® (Poly (2,6 Diphenyl-P-Phenylenoxid)) aufgebracht. Die halbquantitative Bestimmung der Mineralölkohlenwasserstoffe (MKW, gesamt) erfolgte nach Elution vom Tenax mittels Gaskomatographie und Flammenionisationsdetektor (GC-FID) gegen den internen Standard (C 13 Kohlenwasserstoffe).

Die Untersuchung ergab, dass die Migration von Mineralölkohlenwasserstoffe bei Ausführungsbeispiel 1 an der Nachweisgrenze blieb.

Bei den Ausführungsbeispielen 2 und 3 blieb sie unterhalb der Nachweisgrenze. Die Ergebnisse sind in der nachfolgenden Tabelle zusammengefasst.

| | | |
|---|---|---|
| Richtwert | 0,6 mg/kg Food | |

| **Muster 103279 GD 2 Karton 260 g/m² + Polymer 13 g/m²** | **Mineralöl {MKW, gesamt)** | **Dimension** |
|---|---|---|
| Messwerte | ca. 0,025 | [mq C13-Äquivalent/dm³ Packstoff] |

| | | |
|---|---|---|
| Jmrechnunq (EU-Würfe!) | ca. 0,15 | mg/ kg Food |

| **Muster 103280 GD 2 Karton 260 g/ma + Polymer 15 g/m2** | **Mineralöl (MKW, gesamt)** | **Dimension** |
|---|---|---|
| Messwerte | < 0,02 | [mg C13-Äquivalent/ dm2 Packstoff] |
| Umrechnung (EU-Würfel) | < 0,12 | mg/ kg Food |

| **Muster 103231 GD 2 Karton 260 g/m² + Polymer 20 g/m²** | **Mineralöl (MKW, gesamt)** | **Dimension** |
|---|---|---|
| Messwerte | <0,02 | [mg C13∼Aquivalent/ dm² Packstoff] |
| Umrechnung (EU-Würfe!) | <0,12 | mg/ kg Food |

## Patentansprüche

1. Beschichtetes Papier oder Karton umfassend
- mindestens eine Schicht aus Papier oder Karton,
- eine auf der Schicht aus Papier oder Karton angeordnete Schicht aus einem Haftvermittler und
- eine auf der Schicht aus einem Haftvermittler angeordnete Schicht aus einem Biokunststoff,
**dadurch gekennzeichnet, dass** der Biokunststoff ein polarer Typ Biokunststoff ist und dass
- zwischen der Schicht aus Papier oder Karton und der Schicht aus einem Haftvermittler eine Schicht aus einem Polyolefin oder einem modifizierten Polyolefin, wie LDPE und/oder HDPE oder eine Schicht aus PP oder PE oder aus EBA, EMA, EAA oder EAH angeordnet ist.

2. Beschichtetes Papier oder Karton nach Anspruch 1, bei dem der Biokunststoff Polymilchsäure, ein auf Stärke oder auf Cellulose basierendes Polymer oder ein sonstiger Biopolyester ist.

3. Beschichtetes Papier oder Karton nach Anspruch 1 oder 2, bei dem als Haftvermittler ein geeignetes bindendes Polymer vorgesehen ist.

4. Beschichtetes Papier oder Karton nach Anspruch 3, bei dem als Haftvermittler Ethylen, Acrylester, Maleinsäureanhydridterpolymer oder dergleichen vorgesehen ist.

5. Beschichtetes Papier oder Karton nach einem der Ansprüche 1 bis 4, bei dem die Schicht aus Biokunststoff ein Flächengewicht von 3 bis 10 g/m² hat.

6. Beschichtetes Papier oder Karton nach einem der Ansprüche 1 bis 5, bei dem der Haftvermittler ein Flächengewicht von 2 bis 20 g/m² hat, vorzugsweise 2 bis 15 g/m².

7. Beschichtetes Papier nach einem der Ansprüche 1 bis 6, bei dem mindestens eine Schicht aus Papier oder Karton aus Recyclingpapier oder Recyclingkarton und/oder bei dem mindestens eine Schicht aus Papier oder Karton aus Primärfaserpapier oder Primärfaserkarton ist.

8. Beschichtetes Papier oder Karton gemäß einem der Ansprüche 1 bis 7, bei dem die mindestens eine Schicht aus Papier oder Karton beidseitig beschichtet ist.

9. Beschichtetes Papier oder Karton gemäß einem der Ansprüche 1 bis 8 mit mehreren Schichten aus Papier oder Karton.

10. Beschichtetes Papier nach Anspruch 9, bei dem mindestens eine Schicht aus Recyclingpapier oder Recyclingkarton ist.

11. Beschichtetes Papier gemäß einem der Ansprüche 1 bis 10 umfassend ein gebleichtes oder ungebleichtes Kraftpapier mit einer Grammatur im Bereich von 20 bis 90 g/m².

12. Verpackung ganz oder teilweise hergestellt aus einem beschichteten Papier oder Karton gemäß einem der Ansprüche 1 bis 11.

13. Verpackung nach Anspruch 12, die eine Primärverpackung und/oder eine Sekundärverpackung ist oder umfasst.

14. Verpackung gemäß Anspruch 12 oder 13, die eine Faltschachtel, und/oder Einschlagpapier und/oder eine Tüte und/oder ein Beutel und/oder eine andere flexible Verpackung ist oder umfasst.

15. Verpackung nach Anspruch 13 und 14, die als Primärverpackung einen die Ware aufnehmenden Beutel aus beschichtetem Papier und als Sekundärverpackung eine den Beutel aufnehmende Faltschachtel aus Karton oder beschichtetem Karton umfasst.

16. Verpackung nach einem der Ansprüche 12 bis 15 enthaltend Lebensmittel oder Arzneimittel.

17. Liner hergestellt aus einem beschichteten Papier oder Karton gemäß einem der Ansprüche 9 bis 11.

## Claims

1. A coated paper or cardboard, comprising
• at least one layer of paper or cardboard,
• a layer of an adhesion promoter, arranged on the layer of paper or cardboard, and
• a layer of a bioplastic, arranged on the layer of an adhesion promoter,
• **characterised in that** the bioplastic is a polar type of bioplastic, and that
• a layer of a polyolefin or a modified polyolefin, like LDPE and/or HDPE or a layer of PP or PE or of EBA, EMA, EAA or EAH is arranged between the layer of paper or cardboard and the layer of an adhesion promoter.

2. A coated paper or cardboard according to claim 1, wherein the bioplastic is polylactic acid, a polymer based on starch or cellulose, or any other biopolymer.

3. A coated paper or cardboard according to claim 1 or 2, wherein a suitable binding polymer is provided as adhesion promoter.

4. A coated paper or cardboard according to claim 3, wherein ethylene, acrylic ester, maleic anhydride terpolymer or the like is provided as adhesion promoter.

5. A coated paper or cardboard according to any one of claims 1 to 4, wherein the layer of bioplastic has a weight per unit area of 3 to 10 g/m².

6. A coated paper or cardboard according to any one of claims 1 to 5, wherein the adhesion promoter has a weight per unit area of 2 to 20 g/m², preferably 2 to 15 g/m².

7. A coated paper according to any one of claims 1 to 6, wherein at least one layer of paper or cardboard is made of recycled paper or recycled cardboard, and/or wherein at least one layer of paper or cardboard is made of primary fibre paper or primary fibre cardboard.

8. A coated paper or cardboard according to any one of claims 1 to 7, wherein the at least one layer of paper or cardboard is coated on both sides.

9. A coated paper or cardboard according to any one of claims 1 to 8, with plural layers of paper or cardboard.

10. A coated paper according to claim 9, wherein at least one layer is made of recycled paper or recycled cardboard.

11. A coated paper according to any one of claims 1 to 10, comprising a bleached or unbleached kraft paper with a grammage in the range of 20 to 90 g/m².

12. A package, completely or partly made of a coated paper or cardboard according to any one of claims 1 to 11.

13. A package according to claim 12, which is or comprises a primary package and/or a secondary package.

14. A package according to claim 12 or 13, which is or comprises a folding box and/or wrapping paper and/or a bag and/or a pouch and/or any other flexible package.

15. A package according to claim 13 and 14, which comprises a pouch of coated paper accommodating the good as the primary package, and as the secondary package a folding box of cardboard or coated cardboard accommodating the pouch.

16. A package according to any one of claims 12 to 15, containing food or medicines.

17. A liner, made of a coated paper or cardboard according to any one of claims 9 to 11.

## Revendications

1. Papier ou carton revêtu, comportant
• au moins une couche de papier ou carton,
• une couche d'un promoteur d'adhésion, arrangée sur la couche de papier ou de carton, et
• une couche d'un bioplastique, arrangée sur la couche d'un promoteur d'adhésion,
• **caractérisé en ce que** le bioplastique est un type de bioplastique polaire, et que
• une couche d'un polyoléfine ou un polyoléfine modifié, comme LDPE et/ou HDPE ou une couche de PP ou PE ou de EBA, EMA, EAA ou EAH est arrangée entre la couche de papier ou carton et la couche d'un promoteur d'adhésion.

2. Papier ou carton revêtu selon la revendication 1, dans lequel le bioplastique est de l'acide polylactique, un polymère basé sur amidon ou cellulose, ou un autre biopolymère.

3. Papier ou carton revêtu selon la revendication 1 ou 2, dans lequel un polymère de liaison approprié est pourvu comme promoteur d'adhésion.

4. Papier ou carton revêtu selon la revendication 3, dans lequel éthylène, ester acrylique, terpolymère d'anhydride maléique ou similaire est pourvu comme promoteur d'adhésion.

5. Papier ou carton revêtu selon l'une quelconque des revendications 1 à 4, dans lequel la couche de bioplastique a une masse surfacique de 3 à 10 g/m².

6. Papier ou carton revêtu selon l'une quelconque des revendications 1 à 5, dans lequel le promoteur d'adhésion a une masse surfacique de 2 à 20 g/m², de préférence 2 à 15 g/m².

7. Papier revêtu selon l'une quelconque des revendications 1 à 6, dans lequel au moins une couche de papier ou carton est faite de papier recyclé ou carton recyclé, et/ou dans lequel au moins une couche de papier ou carton est faite de papier à base de fibres primaires ou de carton à base de fibres primaires.

8. Papier ou carton revêtu selon l'une quelconque des revendications 1 à 7, dans lequel l'au moins une couche de papier ou carton est revêtue sur les deux côtés.

9. Papier ou carton revêtu selon l'une quelconque des revendications 1 à 8, avec plusieurs couches de papier ou carton.

10. Papier revêtu selon la revendication 9, dans lequel au moins une couche est faite de papier recyclé ou carton recyclé.

11. Papier revêtu selon l'une quelconque des revendications 1 à 10, comportant un papier kraft blanchi ou non-blanchi avec un grammage dans la gamme de 20 à 90 g/m².

12. Emballage, entièrement ou partiellement fait d'un papier ou carton revêtu selon l'une quelconque des revendications 1 à 11.

13. Emballage selon la revendication 12, qui est ou comporte un emballage primaire et/ou un emballage secondaire.

14. Emballage selon la revendication 12 ou 13, qui est ou comporte une boîte pliante et/ou un papier de protection et/ou un sac et/ou un sachet et/ou un autre emballage flexible.

15. Emballage selon la revendication 13 et 14, qui comporte un sachet de papier revêtu qui reçoit l'article comme emballage primaire, et comme emballage secondaire une boîte pliante de carton ou carton revêtu qui reçoit le sachet.

16. Emballage selon l'une quelconque des revendications 12 à 15, contenant des aliments ou des médicaments.

17. Liner, produit d'un papier ou carton revêtu selon l'une quelconque des revendications 9 à 11.
